# FASCICULE DE BREVET EUROPEEN

(11) **EP 1 270 980 B1**
(45) Date de publication et mention de la délivrance du brevet: **13.06.2007**
(21) Numéro de dépôt: 02291509.4
(22) Date de dépôt: 17.06.2002
(51) Int. Cl.: F16D 55/224

(54) **Frein à disque notamment pour usage industriel**
Scheibenbremse, insbesondere für Industriegebrauch
Disc brake, in particular for industrial use

(30) Priorité: 20.06.2001 FR 0108110
(43) Date de publication de la demande: 02.01.2003
(73) Titulaire: Sime-Stromag, 18150 La Guerche-sur-l'Aubois (FR)
(72) Inventeur: Dufour, Gérard, 18600 Sancoins (FR); Lacrampe, Jérôme, 89000 Auxerre (FR); Eon, Christian, 58660 Coulanges les Nevers (FR)
(74) Mandataire: Santarelli

(56) Documents cités:
- EP-A- 0 893 615
- EP-A- 0 897 071
- US-A- 5 660 250

## Description

La présente invention concerne d'une manière générale les freins à disque, notamment pour usage industriel.

Elle s'applique avantageusement aux freins dits de sécurité, pour installations de manutention par exemple, où ces freins sont normalement serrés et ne sont desserrés que sur intervention de l'utilisateur.

De tels freins de sécurité trouvent plus particulièrement leur emploi dans l'industrie, par exemple pour l'équipement de ponts roulants, treuils, transporteurs, convoyeurs ou autres.

D'une manière générale, on connaît des freins à disque, du genre comportant deux patins de freinage destinés à coopérer avec les faces latérales d'un disque et qui sont portés par deux mâchoires.

Des moyens de manoeuvre constitués, par exemple, par des moyens élastiques agissent, le plus souvent de manière indirecte, par l'intermédiaire d'une structure articulée, sur les deux mâchoires pour les rapprocher l'une de l'autre et amener ainsi les deux patins à coopérer avec les faces latérales du disque pour le freinage de celui-ci.

Inversement, pour desserrer un tel frein, d'autres moyens de manoeuvre sont mis en oeuvre pour s'opposer aux moyens élastiques précités et exercer sur la structure articulée précitée un effort inverse qui tend à écarter les mâchoires l'une de l'autre.

De tels moyens de manoeuvre sont par exemple de type électrique, hydraulique ou magnétique ou encore d'un type combiné, tel que par exemple du type électrohydraulique.

Les moyens élastiques précités qui constituent les moyens de serrage sont tarés nominalement en sorte d'assurer le couple de freinage requis.

Or, comme on le sait, un patin de freinage porte une garniture de friction qui est amenée à s'user au contact du disque.

Ainsi, l'épaisseur de la garniture diminue au cours du temps en correspondance avec l'action prolongée de freinage du disque et les moyens élastiques "s'allongent", ce qui modifie, dans le sens d'une diminution, l'effort de freinage qu'ils sont capables d'assurer.

Une telle conséquence nuit à la sécurité d'un tel frein.

Selon le document EP-A-0 893 615, un frein à disque comporte :
- deux patins destinés à coopérer avec les faces latérales d'un disque et portés par deux mâchoires,
- au moins deux bras en vis-à-vis portant chacun une mâchoire dans une partie distincte des deux extrémités opposées du bras considéré, les bras étant respectivement montés à rotation sur deux axes fixes à l'une O, O' de leurs extrémités disposées en vis-à-vis,
- au moins un levier monté à rotation sur l'extrémité opposée dite libre B de l'un des bras par une partie dudit levier distincte de ses deux extrémités opposées,
- une tige reliant le levier et l'autre bras,
- des moyens de manoeuvre aptes à entraîner en rotation le levier dans un sens ou dans un autre pour rapprocher ou écarter les mâchoires l'une de l'autre,
- un détecteur d'usure des patins porté par le levier et coopérant avec la tige.

La présente invention a pour objet un frein à disque du type ci-dessus dans lequel l'opération de rattrapage d'usure est réalisée de manière simple.

Selon l'invention, un frein à disque du type ci-dessus est caractérisé en ce que la tige est pourvue de deux filets dont les pas sont inversés l'un par rapport à l'autre et qui coopèrent respectivement avec des éléments complémentaires respectivement agencés à l'extrémité D du levier située à proximité de l'extrémité opposée dite libre B de l'un des bras, et à l'extrémité opposée dite libre B' de l'autre bras, en sorte que, lorsque le levier est placé dans une position dite active, il entraîne en rotation, dans un sens dit actif, la tige autour de son axe de manière à rapprocher les deux bras et donc les deux mâchoires l'une de l'autre.

Ainsi, de manière simple, lorsqu'une usure des patins est détectée, un mécanisme de rattrapage d'usure fait tourner autour de son axe la tige aux filets inversés, ce qui tend à rapprocher l'un de l'autre les bras porteurs des mâchoires et donc les mâchoires.

On rattrape de cette façon par un seul mouvement le jeu dû à l'usure qui s'est produit sur les deux patins et non sur un seul patin.

Selon une caractéristique, dans sa position active, le détecteur d'usure entraîne en rotation une roue libre attelée à la tige et qui provoque la rotation de cette dernière.

Selon une caractéristique, en dehors de la position active du détecteur d'usure, lorsque la roue libre est entraînée en rotation par ledit détecteur d'usure, le mouvement de rotation de la roue libre est indépendant de celui de la tige.

Selon une caractéristique, le détecteur d'usure comporte un pion solidaire de la roue libre et le levier comporte, à son extrémité D' opposée à l'extrémité D qui coopère avec la tige, une pièce solidaire de cette extrémité opposée D' et s'étendant en direction de la tige, une fenêtre étant pratiquée dans ladite pièce pour recevoir le pion et permettre son déplacement à l'intérieur de ladite fenêtre, d'un bord de la fenêtre au bord opposé, lors d'un mouvement de rotation du levier correspondant à l'ouverture maximale des mâchoires.

Selon une caractéristique, au delà d'un déplacement du pion correspondant à la course de fermeture maximale des mâchoires et donc au delà du mouvement de rotation correspondant de la roue libre, le détecteur d'usure se trouve dans sa position active et le déplacement du pion, dans une direction correspondant au mouvement de rotation inverse du levier, entraîne en rotation la roue libre qui provoque à son tour la rotation de la tige.

Selon une caractéristique, les bords opposés de la fenêtre ne sont pas parallèles entre eux afin d'assurer une constance dans le rattrapage du jeu dû à l'usure des patins, indépendamment du degré d'usure.

Selon une caractéristique, le détecteur d'usure coopère avec une partie de la tige située au voisinage d'une de ses extrémités qui est opposée à l'extrémité coopérant avec le levier.

Selon une caractéristique, chaque mâchoire est montée sur un bras par l'intermédiaire d'un axe dit de montage et une biellette est montée articulée par ses deux extrémités opposées autour de deux axes de pivotement, l'un monté sur une queue de la mâchoire correspondante et l'autre monté sur un socle fixe, l'extrémité O, O' dudit bras étant montée à rotation sur ledit socle par l'intermédiaire d'un axe de rotation, l'ensemble des axes de montage, de pivotement et de rotation étant agencés parallèlement les uns aux autres et de manière à former un parallélogramme de commande.

Selon une caractéristique, l'un des bras portant la mâchoire qui est la première à s'écarter du disque lorsque les moyens de manoeuvre sont actionnés pour provoquer une action de défreinage est relié à un mécanisme de mise en butée monté avec un jeu prédéterminé correspondant à la moitié de l'ouverture maximale des deux mâchoires, ledit mécanisme étant agencé et dimensionné pour permettre à ladite mâchoire de s'écarter du disque d'une distance d égale à la moitié de l'ouverture maximale des deux mâchoires lors d'un équilibrage dynamique du frein, répartissant ainsi également l'ouverture des mâchoires.

Selon une caractéristique, le bras est doublé et le mécanisme de mise en butée comporte un organe de liaison entre les deux bras parallèles qui suit le mouvement de rotation des bras, ledit organe étant attelé à un élément monté pivotant autour d'un axe fixe qui est parallèle à l'axe de rotation des bras, l'élément pivotant étant monté sur l'axe fixe avec un jeu correspondant à la distance d, de manière à ce que, lors du mouvement de rotation des bras, l'élément pivotant se déplace de la distance d et vient en butée contre ledit axe fixe.

Selon une caractéristique, l'organe de liaison relie les deux bras par deux portions d'extrémités opposées disposées le long d'un axe dit de liaison parallèle à l'axe fixe de l'élément pivotant, ledit organe de liaison comportant une portion dite centrale à laquelle est attelée une extrémité d'une biellette reliée à l'élément pivotant et des moyens de friction étant agencés entre ladite portion centrale et l'un des bras.

Selon une caractéristique, l'une des portions d'extrémité se prolonge à travers la portion centrale en direction de l'autre portion d'extrémité et les deux portions d'extrémité sont fixées l'une à l'autre.

Selon une caractéristique, des moyens élastiques sont agencés entre la portion d'extrémité opposée à celle au voisinage de laquelle sont disposés les moyens de friction et la portion centrale de manière à maintenir lesdits moyens de friction serrés entre ladite portion centrale et le bras correspondant.

Selon une caractéristique, le frein à disque selon l'invention comporte un limiteur d'effort en glissement d'au moins un des deux bras en vis-à-vis.

Ainsi, le limiteur d'effort permet de suivre les mouvements axiaux du disque en cas de dépassement des valeurs admises d'ouverture des mâchoires pour lesquelles le frein est conçu.

Avantageusement, ce limiteur d'effort est monté sur l'un des bras sur lequel est prévu le mécanisme de mise en butée précité.

Plus particulièrement, le mécanisme de mise en butée pourvu de moyens de friction maintenus serrés entre la portion centrale et le bras correspondant est un limiteur d'effort.

D'autres caractéristiques et avantages apparaîtront au cours de la description qui va suivre, donnée uniquement à titre d'exemple non limitatif et faite en référence aux dessins annexés, sur lesquels :
- la figure 1 est une vue schématique d'un frein à disque selon l'invention ;
- la figure 2 est une vue en perspective montrant un exemple de réalisation d'un frein à disque selon l'invention ;
- la figure 3 est une vue suivant la flèche III du frein à disque de la figure 2;
- la figure 4 est une vue de dessus suivant la flèche IV du frein à disque de la figure 3 ;
- la figure 5 est une vue en coupe longitudinale suivant la flèche V de la figure 4 ;
- la figure 6 est une vue locale en coupe suivant la flèche VI de la figure 3.

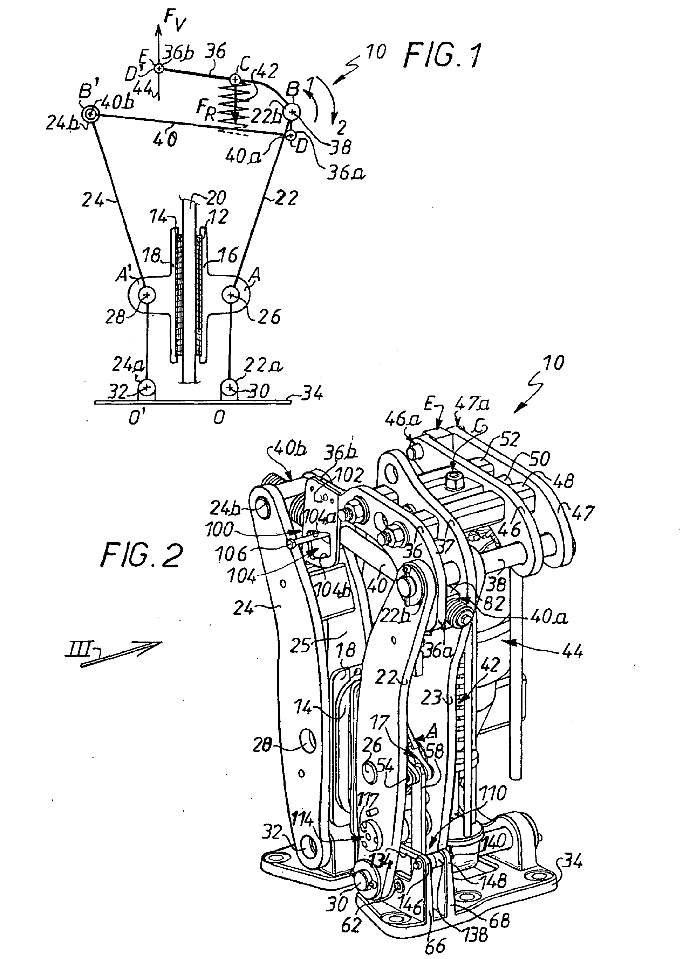

En se reportant au schéma de la figure 1, on voit qu'un frein à disque selon l'invention désigné par la référence générale notée 10 comprend deux patins 12 et 14 portés par deux mâchoires 16 et 18 et qui sont destinés à coopérer avec les faces latérales d'un disque 20 partiellement représenté.

Chaque mâchoire 16, 18 est elle-même portée par au moins un bras noté respectivement 22, 24, la mâchoire étant attelée audit bras par l'intermédiaire d'un axe de montage noté respectivement 26, 28 perpendiculaire à la direction de déplacement des mâchoires et des bras.

Comme représenté sur la figure 1, chaque mâchoire est disposée dans une partie du bras considéré qui est distincte des deux extrémités opposées dudit bras.

Chaque bras 22, 24 est respectivement monté à rotation sur un axe fixe noté respectivement 30, 32 assujetti à un socle fixe 34 et parallèle à l'axe de montage respectif 26, 28.

Plus précisément, les bras sont respectivement montés à rotation sur ces axes à l'une 22a, 24a de leurs extrémités qui sont disposées en vis-à-vis l'une de l'autre.

Le frein à disque selon l'invention comporte également un levier 36 disposé au-dessus des bras 22 et 24 et qui est monté à rotation sur l'extrémité opposée libre 22b dudit bras par l'intermédiaire d'un axe de rotation 38.

L'axe 38 attèle l'extrémité 22b du bras 22 au levier 36 dans une partie de ce dernier distincte de ses deux extrémités opposées 36a et 36b.

Le frein à disque selon l'invention comporte également une tige 40 pourvue à chacune de ses extrémités d'un filet dont le pas est inversé d'une extrémité à l'autre.

La tige coopère par l'intermédiaire de ces filets aux pas inversés (figures 2 à 5) respectivement avec l'extrémité 36a du levier 36 située à proximité de l'axe de rotation 38 et donc de l'extrémité opposée libre 22b du bras 22 et avec l'extrémité opposée libre 24b du bras 24.

Des moyens de manoeuvre 42 et 44 sont représentés de manière très schématique sur la figure 1.

Les moyens de manoeuvre 42 symbolisent des moyens élastiques qui travaillent en compression et qui sont aptes à entraîner le levier 36 en rotation autour de l'axe de rotation 38 en vue de rapprocher les mâchoires 16 et 18 l'une de l'autre.

On va maintenant décrire succinctement le mécanisme mis en oeuvre quand les moyens élastiques exercent sur la partie horizontale du levier 36 à l'endroit repéré par la lettre C l'effort de rappel noté Fᵣ.

Sous l'action de cet effort Fᵣ, le levier 36 pivote par rapport à l'axe de rotation 38 dans le sens indiqué par la flèche notée 1, ce qui permet, par l'intermédiaire de la tige 40 reliant les deux bras et du fait que le bras 22 reste dans sa position, de provoquer le rapprochement du bras 24 vers le disque 20, par pivotement autour de son axe de rotation 32.

Les efforts exercés sur la tige 40 s'équilibrent selon le principe de l'action et de la réaction, ce qui a pour effet ensuite de rapprocher le bras 22 du disque 20, par pivotement autour de son axe de rotation 30.

Le rapprochement des bras 22 et 24 l'un de l'autre a pour conséquence le rapprochement des mâchoires 16 et 18 l'une de l'autre et donc amène les patins 12 et 14 portés par ces mâchoires à coopérer avec les faces latérales du disque 20.

Lorsqu'il est nécessaire de faire cesser l'action de freinage, donc de desserrer le frein, on fait appel à des moyens de manoeuvre représentés schématiquement par la référence 44 sur la figure 1 et qui sont aptes à entraîner le levier en rotation dans le sens indiqué par la flèche notée 2 autour de l'axe de rotation 38 en vue d'écarter les mâchoires l'une de l'autre.

Ces moyens de manoeuvre sont par exemple constitués d'un vérin électrohydraulique qui exerce un effort Fᵥ s'exerçant sur la partie horizontale du levier 36 à l'endroit repéré par la lettre E.

Cet effort venant annuler l'effort de rappel exercé par les moyens élastiques 42 entraîne le pivotement du levier autour de l'axe 38, annule l'effort exercé au point de contact entre les extrémités 36a du levier et 40a de la tige filetée et, lors de la poursuite de ce mouvement de pivotement, provoque, par l'intermédiaire de la tige filetée 40, le recul du bras 24 articulé au niveau de l'axe de rotation 32, et décolle ainsi la mâchoire 18 articulée au niveau de l'axe 28 et son patin 14 de la face latérale correspondante du disque 20.

Par réaction, le bras 22 articulé autour de l'axe de rotation 30 s'éloigne du disque 20 et décolle ainsi la mâchoire 16 portant le patin 12 de la face correspondante du disque.

La course maximale des mâchoires lors de leur ouverture est déterminée par la course des moyens de manoeuvre 44.

Les figures 2 à 5 montrent un exemple de réalisation du frein à disque selon l'invention et sur lesquelles les pièces jouant le même rôle que celles du schéma de la figure 1 portent les mêmes références.

D'autres détails de réalisation et particularités de fonctionnement apparaissent sur les figures 2 et suivantes.

En particulier, comme représenté sur la figure 2, la structure de la figure 1 a été doublée de telle sorte que l'on dispose de deux bras parallèles 24, 25 au lieu d'un seul bras 24, de deux bras parallèles 22, 23 au lieu d'un seul bras 22, et de deux leviers 36 et 37 au lieu d'un seul noté 36.

Les bras et leviers ainsi doublés comportent toutefois les mêmes axes d'articulation que ceux décrits en référence avec la structure de la figure 1.

Par ailleurs, on remarquera que le double levier constitué des leviers 36 et 37 est également ici, avantageusement pour des questions d'encombrement, lui-même doublé de façon parallèle par un autre double levier constitué des leviers 46 et 47 qui sont attelés au levier 36 et 37 par l'intermédiaire de traverses latérales respectivement notées 48, 50 et 52.

L'ensemble constitué des leviers 36, 37, 46, 47 et des traverses latérales forment un seul bloc articulé autour de l'axe de rotation 38 précédemment décrit. La masse de ce bloc est suffisamment importante pour peser sur les bras 22, 23 à l'ouverture des mâchoires et en position verticale du frein.

On va maintenant préciser l'endroit où s'exercent les efforts des moyens de manoeuvre 42 et 44 qui, par souci de simplification sur la figure 1, ont été appliqués sur le levier 36.

Sur la figure 2 est représenté un moyen de manoeuvre 42 réalisé sous la forme d'un moyen élastique travaillant en compression tel que par exemple un ressort noté 42 et qui exerce son effort de rappel sur la traverse latérale 50 au point repéré par la lettre C, tandis qu'un autre moyen de manoeuvre 44 constitué par exemple par un vérin électrohydraulique exerce son effort compensant la force de rappel du moyen élastique précité dans une zone du double levier 46, 47 située entre les extrémités 46a et 47a et repérée par la lettre E.

Il convient de noter que le frein à disque selon l'invention n'est pas nécessairement disposé dans une position verticale telle que celle représentée sur les dessins mais peut au contraire être agencé suivant toute autre orientation sans que son fonctionnement ne s'en trouve perturbé.

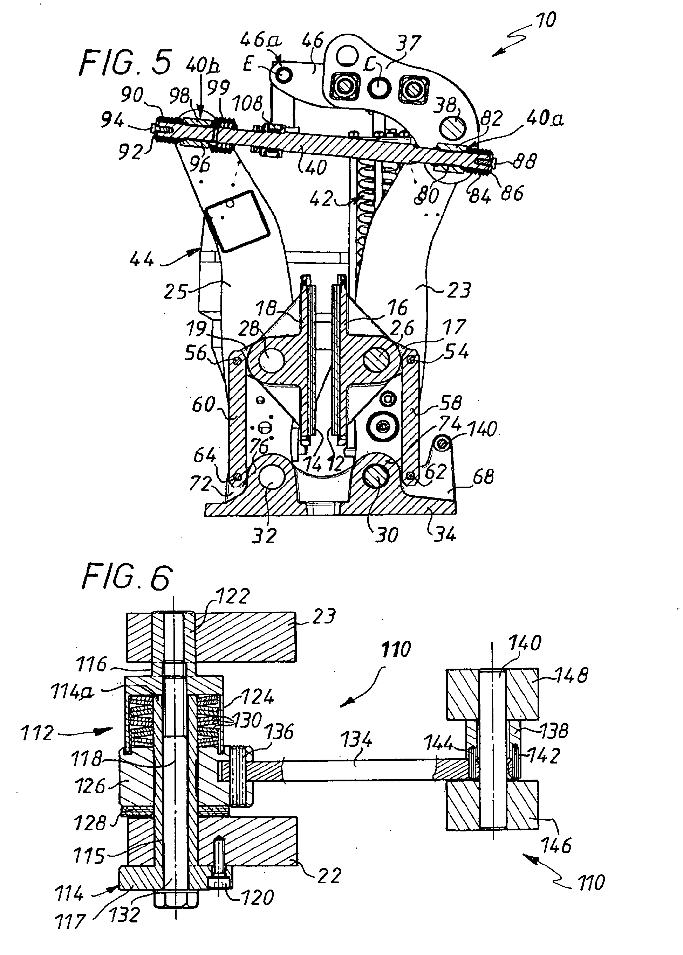

Comme représenté sur la figure 5, un système qualifié de parallélogramme de commande monté en relation avec chaque mâchoire 16, 18 permet de remédier à un défaut de parallélisme apparaissant entre les mâchoires lors de leur ouverture.

En effet, en l'absence d'un tel parallélogramme de commande en relation avec chaque mâchoire, on peut constater une ouverture biaisée des patins de freinage associés aux mâchoires liée à leur positionnement et à la cinématique du frein qui engendre un écart entre la garniture de friction et la face correspondante du disque en partie basse.

Un tel écart peut entraîner une usure anarchique et nécessiter d'augmenter la course d'ouverture des mâchoires afin de dégager correctement les patins de freinage du disque.

Cette surcourse d'ouverture des mâchoires est préjudiciable au fonctionnement prévu lors de la construction du moyen de manoeuvre tel que le vérin mentionné ci-dessus, puisqu'en effet il est prévu d'utiliser généralement 50 % de la course du vérin pour amener la garniture de friction en contact avec la face correspondante du disque et les 50 % de course restants constituent une réserve de sécurité pour pallier à l'usure de la garniture entre deux réglages.

La mâchoire 16 (respectivement 18) est pourvue d'une queue de mâchoire 17 (respectivement 19) formant une chape (figure 2) à laquelle est attelé un axe de pivotement 54 (respectivement 56) agencé parallèlement à l'axe de montage 26 (respectivement 28) de la mâchoire considérée.

Une biellette 58 (respectivement 60) est montée articulée par une de ses extrémités autour de cet axe de pivotement 54 (respectivement 56) et est également montée articulée par son extrémité opposée autour d'un deuxième axe de pivotement 62 (respectivement 64) parallèle au premier axe de pivotement et solidaire de deux flasques parallèles entre eux 66 et 68 (respectivement 70 et 72) qui s'étendent perpendiculairement au plan horizontal du socle 34.

Comme représenté sur la figure 5, la biellette 58 (respectivement 60) est maintenue en contact à ses deux extrémités opposées respectivement avec un renflement de la partie de la mâchoire 16 (respectivement 18) formant un palier autour de l'axe de montage 26 (respectivement 28) et avec un renflement 74 (respectivement 76) qui s'étend à partir du plan horizontal du socle 34 en direction des bras correspondants afin de constituer un palier dans lequel est monté l'axe de rotation 30 (respectivement 32) desdits bras.

L'ensemble constitué par l'axe de montage 26 (respectivement 28), l'axe de rotation 30 (respectivement 32) et les axes de rotation 54 et 62 (respectivement 56 et 64) de la biellette 58 (respectivement 60) constitue ce que l'on appelle le parallélogramme de commande précité qui assure le parallélisme entre les patins 12 et 14 des mâchoires considérées et les faces correspondantes du disque lors de l'ouverture desdites mâchoires.

Dans les freins de l'art antérieur, on dispose par exemple pour le vérin d'une course d'approche de 30mm et d'une course d'usure de 20mm.

Le frein selon l'invention équipé du parallélogramme de commande précité permet avantageusement d'optimiser la course du vérin vers l'usure en prévoyant ainsi pour le vérin, par exemple, une course d'approche de 20mm et une course d'usure de 30mm.

Comme représenté en coupe sur la figure 5, la tige filetée 40 comporte à son extrémité 40a un filetage 80 coopérant avec un élément complémentaire 82 aménagé au niveau de l'extrémité du double levier 36, 37 et plus particulièrement agencé entre ces deux leviers (figure 2).

Cet élément complémentaire forme un écrou avec lequel coopère la partie filetée 80 de la tige 40.

Un soufflet 84 est monté à l'extrémité 40a de la tige, entre l'élément complémentaire formant écrou 82 et une collerette 86 qui est maintenue fermement contre ladite extrémité de la tige par l'intermédiaire d'une vis 88.

Ce montage permet d'éviter toute pollution (poussières...) entre le filet 80 de la tige et l'élément complémentaire formant écrou 82.

Un montage identique constitué d'un soufflet 90, d'une collerette 92 et d'une vis 94, identique au montage précité, est prévu à l'extrémité opposée 40b de la tige filetée pour éviter toute pollution entre le filet 96 de l'extrémité de la tige et l'élément complémentaire formant écrou 98.

Un autre soufflet 99 est par ailleurs monté sur la tige du côté opposé à celui où est monté le soufflet 90 par rapport à l'écrou 98 pour accroître davantage l'étanchéité vis-à-vis des divers polluants.

Les filets 80 et 96 sont montés inversés l'un par rapport à l'autre de manière à ce qu'une rotation de la tige dans un sens déterminé permette le rapprochement des couples de bras 22, 23 d'une part, et 24, 25 d'autre part.

Un mécanisme de rattrapage du jeu dû à l'usure des garnitures des patins de freinage 12 et 14, noté 100, est prévu au niveau des extrémités supérieures des bras et comprend la tige 40 munie à ses extrémités de deux filets aux pas inversés comme décrit ci-dessus.

Le mécanisme 100 comprend également un détecteur d'usure qui, lorsqu'une usure des garnitures de friction portée par les patins est détectée, est placé dans une position dite active dans laquelle il est amené à entraîner en rotation la tige 40 autour de son axe dans un sens dit actif qui tend à rapprocher l'un de l'autre les couples de bras 22, 23 d'une part et 24, 25 d'autre part.

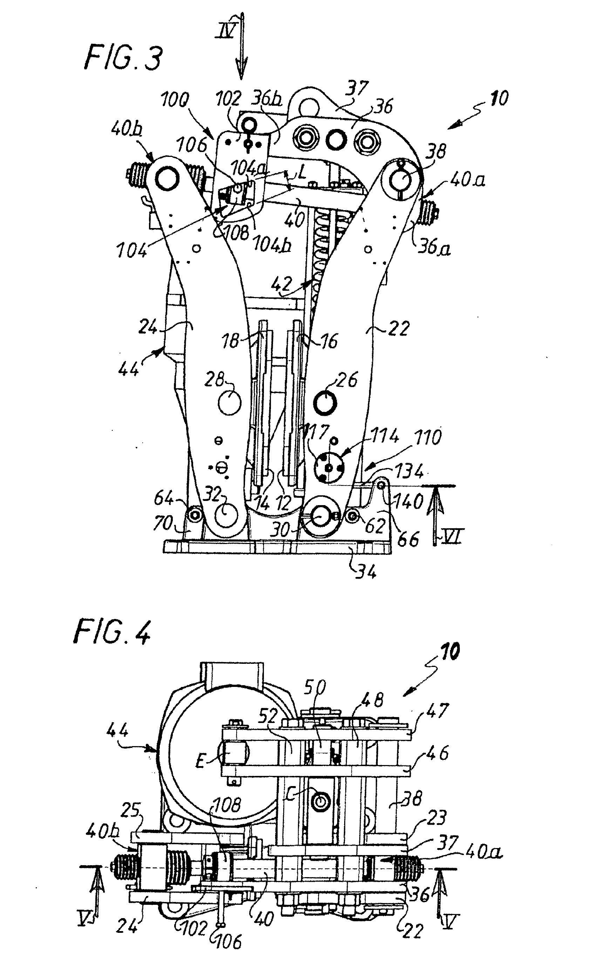

Comme représenté sur les figures 2 et 3, une pièce 102 en forme de plaque sensiblement plane est aménagée à l'extrémité 36a du levier 36 en direction de la tige 40 et comporte, dans la zone dans laquelle cette pièce se trouve en regard de ladite tige, une fenêtre 104 encadrant un pion 106 qui est susceptible de se déplacer d'un bord 104a de la fenêtre au bord opposé 104b lors d'un mouvement de rotation du levier 36 correspondant à la course maximale du vérin électrohydraulique 44, ainsi qu'à la course maximale d'ouverture des mâchoires du frein.

Les bords 104a et 104b de la fenêtre ne sont pas parallèles entre eux et la forme de la fenêtre est d'ailleurs légèrement trapézoïdale, la grande base du trapèze étant tournée vers les bras 24, 25 qui vont se rapprocher de la fenêtre au fur et à mesure de l'usure.

Cet agencement des bords opposés 104a, 104b de la fenêtre permet d'assurer une constance dans le rattrapage du jeu, selon que l'on se place en début d'usure des garnitures ou lorsque celles-ci sont considérablement usées.

Le pion 106 est solidaire d'une roue libre 108 attelée à la tige et, lorsque le pion entre en contact avec un des bords précités de la fenêtre 104, il entraîne en rotation la roue libre.

On notera que, en dehors de la position active du détecteur d'usure, lorsque le pion 106 est en contact avec l'un des bords de la fenêtre, le mouvement de rotation de la roue libre 108 est alors indépendant de celui de la tige 40 et donc n'entraîne pas la rotation de cette dernière.

Normalement, lorsqu'il n'y a pas d'usure des garnitures de friction portées par les patins, le pion 106 se déplace entre les deux bords opposés 104a et 104b de la fenêtre qui sont espacés d'une distance L correspondant à la course maximale d'ouverture des mâchoires et à la course de travail maximale de déplacement du vérin 44.

Lors d'actions de serrage et de desserrage sans usure des garnitures de friction, la fenêtre 104 se déplace pour chaque action d'une distance qui est égale à la distance L définie entre les bords opposés 104a et 104b, en s'abaissant pour l'action de serrage et en se relevant pour l'action de desserrage du frein.

Il convient de noter que lorsque le frein à disque selon l'invention est supposé exercer un effort de freinage sur le disque, les leviers 36 et 37 sont soumis à un effort de rappel exercé vers le bas par les moyens élastiques de manoeuvre 42 qui tendent à faire pivoter ces leviers autour de l'axe de rotation 38 dans le sens indiqué par la flèche notée 1 sur la figure 1 comme expliqué plus haut.

Lorsque l'on exerce une action de serrage sur le disque, le pion se trouve initialement en contact avec le bord 104b de la fenêtre et celle-ci est abaissée du fait de l'effort de rappel exercé vers le bas par les moyens élastiques 42, déplaçant ainsi la fenêtre d'une distance L qui sépare les deux bords opposés 104a et 104b jusqu'à amener son bord 104a en contact avec le pion 106 (figures 2 et 3).

Inversement, lorsqu'une action de desserrage est entreprise, les moyens de manoeuvre que constitue le vérin 44 compensent l'effort de rappel exercé par les moyens élastiques 42 et provoquent le pivotement des leviers 36 et 37 dans le sens indiqué par la flèche 2 sur la figure 1, et donc la remontée de la fenêtre 104.

Ceci a pour effet de faire parcourir en sens inverse à la fenêtre 104 la distance L jusqu'à venir en contact avec le pion 106 par l'intermédiaire du bord opposé 104b.

Dans cette configuration de déplacement, le détecteur d'usure reste dans sa position inactive.

Lorsqu'une usure de garniture de friction portée par les patins 12 et 14 apparaît, lors de l'action de serrage du disque, les moyens élastiques 42 continuent d'exercer leur effort de rappel sur les leviers 36 et 37 tant que les patins 12 et 18 s'usent au contact avec les faces correspondantes du disque, déplaçant ainsi davantage la fenêtre 104 vers le bas et donc le pion 106 d'une distance supérieure à celle indiquée précédemment en cas de non usure (L).

Le déplacement du pion correspondant à l'usure des garnitures entraîne un mouvement de rotation correspondant de la roue libre 108 dont il est solidaire, ce qui provoque un déclenchement du mécanisme interne de cette roue libre et le détecteur d'usure se trouve alors dans sa position active.

La roue libre est par exemple du type roue à rochet munie d'un cliquet ou bien du type roue libre combinée dans laquelle un roulement à billes est combiné avec une roue libre à came à cage en Nylon, une bille alternant avec une came.

Par exemple, par suite du mouvement de rotation de la roue, le bec du cliquet qui était en prise entre deux dents se trouve alors en prise entre deux autres dents, immédiatement consécutives ou non, selon l'ampleur de la rotation et donc de l'usure des garnitures.

Suivant ce sens de déplacement (serrage) le mouvement de rotation de la roue libre est indépendant de celui de la tige 40.

Toutefois, l'entraînement en rotation de la tige n'est mis en oeuvre que lors de l'action de desserrage exercée par les moyens de manoeuvre 44 qui provoquent un pivotement des leviers 36 et 37 dans le sens indiqué par la flèche 2 sur la figure 1 et donc la remontée de la fenêtre 104 dont le bord opposé 104b déplace le pion 106 vers le haut vers la fin de la course du vérin 44.

Lors de la fin du mouvement de remontée de la fenêtre, le déplacement du pion entraîne le mouvement de rotation de la roue libre en sens inverse qui amène par exemple, le bec du cliquet en butée.

Le mouvement de rotation de la roue libre est alors dépendant de celui de la tige 40 suivant un angle correspondant à l'usure détectée, permettant ainsi, grâce aux filets inversés de la tige, le rapprochement des couples de bras 22, 23 d'une part et 24, 25 d'autre part et donc des mâchoires correspondantes.

Comme on le verra par la suite, la masse du frein est répartie de manière à ce que, lors de l'ouverture des mâchoires, la structure articulée du frein pivote vers la droite et pèse sur les bras 22 et 23 qui viennent en butée grâce au mécanisme 110 qui sera décrit ultérieurement.

Ainsi, lors de la rotation de la tige 40 autour de son axe pour le rattrapage du jeu dû à l'usure des garnitures, ce seront plus particulièrement les bras 24, 25 qui se déplaceront en direction des bras 22, 23.

Il est connu que l'angle de rotation de la roue libre pour lequel la tige suit le mouvement de rotation de ladite roue libre dépend du dimensionnement du mécanisme interne à ladite roue libre et ne permet donc pas nécessairement de rattraper en une seule opération le jeu dû à l'usure des garnitures de friction qui a été détectée.

Classiquement, un mécanisme de rattrapage de jeu permet par exemple de rattraper une usure de l'ordre de 0,03 mm en une seule opération.

Selon la présente invention, le système de vis droite/gauche (tige 40 aux filets inversés à ses extrémités) associé à la position excentrée de la fenêtre 104 permet de rattraper une usure au moins quatre à six fois plus grande, sans risque sur la réversibilité.

On notera que l'agencement permettant de rapprocher simultanément les deux couples de bras 22, 23 et 24, 25 l'un de l'autre permet d'agir en une seule fois sur l'usure totale détectée entre les garnitures de friction et le disque et non pas sur l'usure d'une seule garniture.

Cet agencement n'a aucune incidence sur la stabilité et sur la réversibilité de fonctionnement du frein à disque selon l'invention.

Par ailleurs, l'aménagement d'un détecteur d'usure au niveau des extrémités des bras plutôt qu'au niveau des mâchoires permet d'augmenter la plage de détection et la sensibilité du mécanisme 100 tout en améliorant la fiabilité du système.

On notera également que le mécanisme de rattrapage du jeu dû à l'usure des garnitures est excentré par rapport au milieu de la tige et se trouve de ce fait placé à proximité d'une de ses extrémités 40b articulée aux bras 24, 25.

Ce sont justement ces bras 24, 25 qui, comme on le verra ultérieurement, se déplaceront pour se rapprocher des bras 22, 23 lors du rattrapage de jeu, les bras 22, 23 étant quant à eux en butée.

Placé ainsi près de l'extrémité 40b de la tige qui est opposée à l'extrémité 40a à proximité de laquelle se trouve l'axe de pivotement des leviers 36, 37, le mécanisme 100 est plus sensible qu'en position centrée pour un angle de rotation donné des leviers.

Par ailleurs, même dans des milieux fortement pollués, le mécanisme de rattrapage de jeu 100 fonctionne de manière fiable, ceci étant dû, d'une part, aux dimensions relativement importantes de la fenêtre 104 et, d'autre part, aux éléments à soufflet 84, 90 et 99 protégeant la zone de coopération entre la tige et les extrémités respectives des bras 24 et 25 et des leviers 36 et 37.

De retour au fonctionnement du frein, lors de l'action de desserrage précitée, au delà d'un certain degré de rotation de la roue libre, le détecteur d'usure revient dans sa position inactive.

Le pion 106 atteint une position de repos qui est plus basse que la position dans laquelle ce pion se trouvait avant l'action de serrage et avant détection de l'usure.

Le frein à disque selon l'invention comporte également un mécanisme de mise en butée 110 dont une vue schématique en coupe selon la flèche VI de la figure 3 est représentée sur la figure 6.

Ce mécanisme est monté sur les bras 22 et 23 qui portent la mâchoire qui se trouve être la première à s'écarter du disque sous l'effet de la pesanteur lorsque les moyens de manoeuvre constitués par exemple par le vérin 44 sont actionnés pour desserrer le frein.

Le mécanisme de mise en butée comporte un organe de liaison 112 s'étendant perpendiculairement aux bras 22 et 23.

Plus particulièrement, l'organe de liaison 112 relie les deux bras 22 et 23 par deux portions d'extrémités opposées 114, 116 disposées le long d'un axe dit de liaison 118 parallèle à l'axe de pivotement 30 des bras.

L'une des portions d'extrémité 114 possède un corps 115 de forme cylindrique creux pourvu à son extrémité 114a en contact avec la portion d'extrémité opposée 116 d'un alésage.

La portion d'extrémité 114 possède également une tête 117 perpendiculaire à la direction longitudinale du corps cylindrique 115 et qui vient en appui contre la face externe du bras 22.

Un système de fixation tel qu'une vis 120 est prévu pour solidariser la tête 117 de la portion d'extrémité 114 au bras 22.

La portion d'extrémité 114 traverse le bras 22 dans son épaisseur et son corps cylindrique 115 se prolonge en direction de l'autre portion d'extrémité opposée 116.

Cette portion d'extrémité 116 possède une première partie cylindrique 122 traversant le bras 23 dans son épaisseur et qui fait ici saillie par rapport à la face interne de ce bras en direction du corps cylindrique 115 de l'autre portion d'extrémité 114.

La première partie cylindrique 122 de la portion d'extrémité 116 se prolonge par une deuxième portion cylindrique de plus grand diamètre 124 en direction du bras 22 et cette deuxième partie possède un logement interne cylindrique qui reçoit notamment l'extrémité 114a de la portion d'extrémité 114.

La première partie 122 de la portion d'extrémité 116 est également creuse et comporte à l'intérieur un alésage dans sa partie située près de l'extrémité 114a de la portion d'extrémité 114.

L'organe de liaison 112 comporte également une portion centrale 126 qui est disposée entre la seconde portion d'extrémité 116 et le bras 22 et est traversée dans son épaisseur par le corps 115.

Plus particulièrement, des moyens de friction 128 constitués par exemple par une garniture de friction sont interposés entre la portion centrale 126 et la face interne du bras 22.

Des moyens élastiques 130 sont disposés à l'intérieur du logement défini par la seconde partie 124 de la portion d'extrémité 116 afin d'exercer un effort de compression sur la partie centrale 126 en vue de maintenir les moyens de friction 128 serrés contre la face interne du bras 22.

Ces moyens élastiques sont par exemple constitués de rondelles Belleville.

Toutefois, d'autres moyens élastiques tels q'un ressort hélicoïdal ou un élastomère peuvent également convenir.

Une fois que les différents éléments de l'organe de liaison 112 sont assemblés, une vis 132 est insérée à l'intérieur des portions d'extrémité 114 et 116 pour solidariser l'ensemble.

L'organe de liaison 112 est attelé par l'intermédiaire d'une biellette de liaison 134 fixée à la portion centrale 126 dudit organe de liaison par exemple par une goupille 136, à un élément 138 monté pivotant autour d'un axe fixe 140 parallèle à l'axe de rotation 30 des bras 22 et 23.

Cet élément 138 monté pivotant prend ici la forme d'un manchon cylindrique perpendiculaire à la biellette 134 et attelé à celle-ci par l'intermédiaire de deux goupilles 142, 144.

Ce manchon 138 est maintenu de manière fixe dans sa position axiale entre deux oreilles 146 et 148 prolongeant les deux flasques 66 et 68 reliées au socle 34.

Le manchon 138 est monté libre en rotation autour de l'axe fixe 140 avec un jeu J correspondant sensiblement à la distance d qui représente la moitié de l'ouverture totale des deux mâchoires, permettant ainsi aux bras 22 et 23 articulés autour de l'axe 30 et à l'ensemble formé par l'organe de liaison 112, la biellette 134 et l'élément 138, de se déplacer par rapport à l'axe fixe 140 de la distance d.

Lorsque l'action de desserrage du frein est envisagée et que les moyens de manoeuvre constitués par exemple par le vérin 44 effectuent leur course de travail maximale et provoquent la rotation des bras 36, 37, 46 et 47 autour de l'axe de rotation 38 dans le sens indiqué par la flèche 2 sur la figure 1, comme il a été indiqué lors de la description faite en référence à cette figure, l'effort exercé sur la structure articulée est transmis au couple de bras 24 et 25 par l'intermédiaire de la tige 40.

Toutefois, en raison de la masse importante constituée par l'ensemble des leviers 36, 37, 46, 47 et des traverses 48, 50, 52 qui pèsent sur les bras 22, 23, la structure articulée constituée des leviers 36, 37, 46, 47, des bras 22, 23, 24, 25 et de la tige reliant les bras 24, 25 aux leviers 36, 37, va pivoter vers la droite de la figure 3.

Simultanément ou de façon quasi-simultanée, l'effort de desserrage transmis aux bras 24, 25 se transmet, en raison du principe de l'action et de la réaction, aux bras 22 et 23 qui pivotent autour de l'axe 30, écartant ainsi en premier la mâchoire 16 de la face correspondante du disque 20.

La mâchoire 18 s'écarte ensuite de la face correspondante du disque 20.

Toutefois, lorsque les moyens de manoeuvre 44 produisent un effort de manière à provoquer une ouverture totale des mâchoires d'une distance égale à 2d (course maximale), l'ouverture des mâchoires ne se répartit pas de manière égale d'elle-même de part et d'autre des deux faces du disque.

Compte tenu de la répartition de la masse du frein du côté des bras 22, 23 qui provoque, à l'ouverture du frein, en premier lieu l'écartement des bras 22, 23, le mécanisme de mise en butée 110 installé sur les bras 22, 23 limite leur débattement de manière à ce que l'ouverture maximale de la mâchoire 16 portée par les bras correspondants soit au plus égale à la distance d.

Ainsi, ayant atteint une position d'équilibre, l'autre mâchoire 18 portée par les bras 24 et 25 se trouve également à une distance d du disque, compte tenu de l'ouverture totale des mâchoires de la distance 2d commandée par le vérin 44.

Le mécanisme de mise en butée 110 à friction permet donc de maîtriser la répartition de l'ouverture des deux mâchoires de part et d'autre du disque.

Par ailleurs, ce mécanisme 110 amortit les vibrations et chocs pouvant se produire lorsque le frein est desserré, permettant ainsi de réduire les phénomènes d'usure et de corrosion de contact.

Ce mécanisme est également insensible aux conditions d'environnement telles que par exemple la pollution et les poussières.

De plus, ce système ne peut être déréglé en cours de fonctionnement du frein.

En outre, lors du fonctionnement du frein à disque selon l'invention, grâce à l'effort développé par le ressort 130 et au coefficient de friction entre la garniture 128 et la face interne du bras 22, en cas d'usure ou lorsque le disque est voilé, on peut suivre sans effort excessif les déplacements du disque (voile, jeu...), par glissement contrôlé des bras 22 et 23 et redistribuer les jeux entre les garnitures et le disque après desserrage du frein.

## Revendications

1. Frein à disque comportant :
- deux patins (12, 14) destinés à coopérer avec les faces latérales d'un disque (20) et portés par deux mâchoires (16, 18),
- au moins deux bras (22, 24) en vis-à-vis portant chacun une mâchoire dans une partie distincte des deux extrémités opposées du bras considéré, les bras étant respectivement montés à rotation sur deux axes fixes (30, 32) à l'une (O, O') de leurs extrémités disposées en vis-à-vis,
- au moins un levier (36) monté à rotation sur l'extrémité opposée dite libre (B) de l'un des bras (22) par une partie dudit levier distincte de ses deux extrémités opposées,
- une tige (40) reliant le levier (36) et l'autre bras (24),
- des moyens de manoeuvre (42, 44) aptes à entraîner en rotation le levier (36) dans un sens ou dans un autre pour rapprocher ou écarter les mâchoires (16, 18) l'une de l'autre,
- un détecteur d'usure (100) des patins porté par le levier (36) et coopérant avec la tige (40),
**caractérisé en ce que** la tige (40) est pourvue de deux filets (80, 96) dont les pas sont inversés l'un par rapport à l'autre et qui coopèrent respectivement avec des éléments complémentaires (82,93) respectivement agencés à l'extrémité (D) du levier située à proximité de l'extrémité opposée dite libre (B) de l'un des bras, et à l'extrémité opposée dite libre (B') de l'autre bras, en sorte que, lorsque le levier (36) est placé dans une position dite active, il entraîne en rotation, dans un sens dit actif, la tige autour de son axe de manière à rapprocher les deux bras et donc les deux mâchoires l'une de l'autre.

2. Frein à disque selon la revendication 1 , **caractérisé en ce que**, dans sa position active, le détecteur d'usure entraîne en rotation une roue libre (108) attelée à la tige et qui provoque la rotation de cette dernière.

3. Frein à disque selon la revendication 2, **caractérisé en ce que**, en dehors de la position active du détecteur d'usure, lorsque la roue libre (108) est entraînée en rotation par ledit détecteur d'usure, le mouvement de rotation de la roue libre est indépendant de celui de la tige.

4. Frein à disque selon la revendication 2 ou 3, **caractérisé en ce que**, le détecteur d'usure (100) comporte un pion (106) solidaire de la roue libre et le levier (36) comporte, à son extrémité (D') opposée à l'extrémité (D) qui coopère avec la tige, une pièce (102) solidaire de cette extrémité opposée (D') et s'étendant en direction de la tige, une fenêtre (104) étant pratiquée dans ladite pièce pour recevoir le pion et permettre son déplacement à l'intérieur de ladite fenêtre, d'un bord (104a) de la fenêtre au bord opposé (104b), lors d'un mouvement de rotation du levier correspondant à l'ouverture maximale des mâchoires.

5. Frein à disque selon la revendication 4, **caractérisé en ce que**, au delà d'un déplacement du pion correspondant à la course de fermeture maximale des mâchoires et donc au delà du mouvement de rotation correspondant de la roue libre (108), le détecteur d'usure (100) se trouve dans sa position active et le déplacement du pion (106), dans une direction correspondant au mouvement de rotation inverse du levier, entraîne en rotation la roue libre qui provoque à son tour la rotation de la tige (40).

6. Frein à disque selon la revendication 4 ou 5, **caractérisé en ce que** les bords opposés (104a, 104b) de la fenêtre (104) ne sont pas parallèles entre eux afin d'assurer une constance dans le rattrapage du jeu dû à l'usure des patins, indépendamment du degré d'usure.

7. Frein à disque selon l'une des revendications 1 à 6, **caractérisé en ce que** le détecteur d'usure (100) coopère avec une partie de la tige (40) située au voisinage d'une (40b) de ses extrémités qui est opposée à l'extrémité (40a) coopérant avec le levier (36).

8. Frein à disque selon l'une des revendications 1 à 7, **caractérisé en ce que** chaque mâchoire (16, 18) est montée sur un bras par l'intermédiaire d'un axe dit de montage (26, 28) et une biellette (58, 60) est montée articulée par ses deux extrémités opposées autour de deux axes de pivotement (54, 62, 56, 64), l'un monté sur une queue (17, 19) de la mâchoire correspondante et l'autre monté sur un socle fixe (34), l'extrémité (O, O') dudit bras étant montée à rotation sur ledit socle par l'intermédiaire d'un axe de rotation (30, 32), l'ensemble des axes de montage, de pivotement et de rotation étant agencés parallèlement les uns aux autres et de manière à former un parallélogramme de commande.

9. Frein à disque selon l'une des revendications 1 à 8, **caractérisé en ce que**, l'un des bras (22) portant la mâchoire (16) qui est la première à s'écarter du disque lorsque les moyens de manoeuvre (44) sont actionnés pour provoquer une action de défreinage est relié à un mécanisme de mise en butée (110) monté avec un jeu prédéterminé correspondant à la moitié de l'ouverture maximale des deux mâchoires, ledit mécanisme étant agencé et dimensionné pour permettre à ladite mâchoire de s'écarter du disque d'une distance d égale à la moitié de l'ouverture maximale des deux mâchoires lors d'un équilibrage dynamique du frein, répartissant ainsi également l'ouverture des mâchoires.

10. Frein à disque selon la revendication 9, **caractérisé en ce que** le bras est doublé et le mécanisme de mise en butée (110) comporte un organe de liaison (112) entre les deux bras parallèles (22, 23) qui suit le mouvement de rotation des bras, ledit organe étant attelé à un élément (138) monté pivotant autour d'un axe fixe (140) qui est parallèle à l'axe de rotation des bras, l'élément pivotant (138) étant monté sur l'axe fixe avec un jeu correspondant à la distance d, de manière à ce que, lors du mouvement de rotation des bras, l'élément pivotant se déplace de la distance d et vient en butée contre ledit axe fixe.

11. Frein à disque selon la revendication 10, **caractérisé en ce que** l'organe de liaison (112) relie les deux bras (22, 23) par deux portions d'extrémités (114, 116) opposées disposées le long d'un axe (118) dit de liaison parallèle à l'axe fixe de l'élément pivotant, ledit organe de liaison comportant une portion dite centrale (126) à laquelle est attelée une extrémité d'une biellette (134) reliée à l'élément pivotant (138) et des moyens de friction (128) étant agencés entre ladite portion centrale (126) et l'un des bras (22).

12. Frein à disque selon la revendication 11, **caractérisé en ce que** l'une (114) des portions d'extrémité se prolonge à travers la portion centrale (126) en direction de l'autre portion d'extrémité (116) et les deux portions d'extrémité sont fixées l'une à l'autre.

13. Frein à disque selon la revendication 12, **caractérisé en ce que** des moyens élastiques (130) sont agencés entre la portion d'extrémité (116) opposée à celle au voisinage de laquelle sont disposés les moyens de friction (128) et la portion centrale (126) de manière à maintenir lesdits moyens de friction serrés entre ladite portion centrale et le bras correspondant (22).

14. Frein à disque selon l'une des revendications 1 à 13, **caractérisé en ce qu'**il comporte un limiteur d'effort en glissement d'au moins un des deux bras (22, 24) en vis-à-vis.

15. Frein à disque selon les revendications 11 et 14, **caractérisé en ce que** le mécanisme de mise en butée (110) pourvu de moyens de friction maintenus serrés entre la portion centrale et le bras correspondant (22) est un limiteur d'effort.

## Claims

1. Disc brake comprising:
- two pads (12, 14) intended to cooperate with the lateral faces of a disc (20) and carried by two jaws (16, 18),
- at least two opposite arms (22, 24) each carrying a jaw in a distinct part of the two opposite ends of the arm in question, the arms being respectively mounted for rotation on two fixed spindles (30, 32) at one (O, O') of their ends disposed opposite,
- at least one lever (36) mounted for rotation on the so-called free opposite end (B) of one of the arms (22) by a part of the said lever distinct from its two opposite ends,
- a rod (40) connecting the lever (36) and the other arm (24),
- manoeuvring means (42, 44) able to drive the lever (36) in rotation in one direction or another in order to move the jaws (16, 18) closer to each other or further apart from each other,
- a wear detector (100) for pads carried by the lever (36) and cooperating with the rod (40),
**characterised in that** the rod (40) is provided with two threads (80, 96), the pitches of which are reversed with respect to each other and which cooperate respectively with complementary elements (82, 93) respectively arranged at the end (D) of the lever situated close to the so-called free opposite end (B) of one of the arms, and at the so-called free opposite end (B') of the other arm, so that, when the lever (36) is placed in a so-called active position, it drives the rod in rotation, in a so-called active direction, about its axis so as to bring the two arms and therefore the two jaws closer to each other.

2. Disc brake according to claim 1, **characterised in that**, in its active position, the wear detector drives in rotation a freewheel (108) coupled to the rod and which causes the rotation of the latter.

3. Disc brake according to claim 2, **characterised in that**, apart from the active position of the wear detector, when the freewheel (108) is driven in rotation by the said wear detector, the rotation movement of the freewheel is independent of that of the rod.

4. Disc brake according to claim 2 or 3, **characterised in that** the wear detector (100) comprises a pin (106) fixed to the freewheel and the lever (36) comprises, at its end (D') opposite to the end (D) that cooperates with the rod, a piece (102) fixed to this opposite end (D') and extending in the direction of the rod, a window (104) being formed in the said piece to receive the pin and enabling it to move inside the said window, from one edge (104a) of the window to the opposite edge (104b), during a rotation movement of the lever corresponding to the maximum opening of the jaws.

5. Disc brake according to claim 4, **characterised in that**, beyond a movement of the pin corresponding to the maximum closure travel of the jaws and therefore beyond the corresponding rotation movement of the freewheel (108), the wear detector (100) is situated in its active position and the movement of the pin (106), in a direction corresponding to the reverse rotation movement of the lever, drives the freewheel in rotation, which in its turn causes the rotation of the rod (40).

6. Disc brake according to claim 4 or 5, **characterised in that** the opposite edges (104a, 104b) of the window (104) are not parallel to each other in order to ensure consistency of the taking up of the clearance due to the wear on the pads, independently of the degree of wear.

7. Disc brake according to one of claims 1 to 6, **characterised in that** the wear detector (100) cooperates with a part of the rod (40) situated close to the one (40b) of its ends that is opposite to the end (40a) cooperating with the lever (36).

8. Disc brake according to one of claims 1 to 7, **characterised in that** each jaw (16, 18) is mounted on an arm by means of a so-called mounting spindle (26, 28) and a connecting rod (58, 60) is mounted articulated by its two opposite ends about two pivot spindles (54, 62, 56, 64), one mounted on a tail (17, 19) of the corresponding jaw and the other mounted on a fixed base (34), the ends (O, O') of the said arm being mounted for rotation on the said base by means of a rotation spindle (30, 32), all the mounting, pivoting and rotation spindles being arranged parallel to one another and so as to form a control parallelogram.

9. Disc brake according to one of claims 1 to 8, **characterised in that** one of the arms (22) carrying the jaw (16) that is the first to move away from the disc when the manoeuvring means (44) are actuated so as to cause a brake release action is connected to an abutment mechanism (110) mounted with a predetermined clearance corresponding to half the maximum opening of the two jaws, the said mechanism being arranged in size so as to enable the said jaw to move away from the disc by a distance d equal to half the maximum opening of the two jaws when there is a dynamic equilibrium of the brake, thus also contributing to the opening of the jaws.

10. Disc brake according to claim 9, **characterised in that** the arm is duplicated and the abutment mechanism (110) comprises a connection member (112) between the two parallel arms (22, 23) that follows the rotation movement of the arms, the said member being coupled to an element (138) mounted so as to pivot about a fixed spindle (140) that is parallel to the rotation axis of the arms, the pivoting elements (138) being mounted on the fixed spindle with a clearance corresponding to the distance d, so that, when there is a rotation movement of the arms, the pivoting element moves by the distance d and comes into abutment against the said fixed spindle.

11. Disc brake according to claim 10, **characterised in that** the connection member (112) connects the two arms (22, 23) by two opposite end portions (114, 116) disposed along a so-called connection spindle (118) parallel to the fixed spindle of the pivoting element, the said connecting member comprising a so-called central portion (126) to which there is coupled one end of a connecting rod (134) connected to the pivoting element (138) and friction means (128) being arranged between the said central portion (126) and one of the arms (22).

12. Disc brake according to claim 11, **characterised in that** one (114) of the end portions is extended through the central portion (126) in the direction of the other end portion (116) and the two end portions are fixed to each other.

13. Disc brake according to claim 12, **characterised in that** elastic means (130) are arranged between the end portion (116) opposite to the one in the vicinity of which the friction means (128) and the central portion (126) are disposed so as to keep the said friction means clamped between the said central portion and the corresponding arm (22).

14. Disc brake according to one of claims 1 to 13, **characterised in that** it comprises a limiter for limiting the sliding force of at least one of the two facing arms (22, 24) .

15. Disc brake according to claims 11 and 14, **characterised in that** the abutment mechanism (110) provided with friction means held clamped between the central portion and the corresponding arm (22) is a force limiter.

## Patentansprüche

1. Scheibenbremse, umfassend:
- zwei Klötze (12, 14), die dazu bestimmt sind, mit den Seitenflächen einer Scheibe (20) zusammenzuwirken, und von zwei Backen (16, 18) getragen sind,
- mindestens zwei einander gegenüberstehende Arme (22, 24), die jeweils eine Backe in einem Teil tragen, der von den beiden entgegengesetzten Enden des betreffenden Arms verschieden ist, wobei die Arme jeweils an einem (O, O') ihrer einander gegenüber angeordneten Enden auf zwei feststehenden Achsen (30, 32) drehbar montiert sind,
- mindestens einen Hebel (36), der an dem sogenannten freien entgegengesetzten Ende (B) eines der Arme (22) durch einen Teil dieses Hebels, der von seinen beiden entgegengesetzten Enden verschieden ist, drehbar montiert ist,
- eine Stange (40), die den Hebel (36) und den anderen Arm (24) verbindet,
- Betätigungsmittel (42, 44), die in der Lage sind, den Hebel (36) in einer Richtung oder in einer anderen in Drehung zu versetzen, um die Backen (16, 18) einander anzunähern oder voneinander zu entfernen,
- einen von dem Hebel (36) getragenen und mit der Stange (40) zusammenwirkenden Fühler (100) für den Verschleiß der Klötze,
**dadurch gekennzeichnet, dass** die Stange (40) mit zwei Gewinden (80, 96) versehen ist, deren Steigung in Bezug aufeinander entgegengesetzt ist und die jeweils mit ergänzenden Elementen (82, 93) zusammenwirken, die jeweils am Ende (D) des Hebels, das in Nähe des sogenannten freien entgegengesetzten Endes (B) eines der Arme gelegen ist, und an dem sogenannten freien entgegengesetzten Ende (B') des anderen Arms angeordnet sind, so dass, wenn der Hebel (36) in eine sogenannte aktive Stellung gebracht ist, er in einer sogenannten aktiven Richtung die Stange um ihre Achse so in Drehung versetzt, dass die beiden Arme und damit die beiden Backen einander genähert werden.

2. Scheibenbremse nach Anspruch 1, **dadurch gekennzeichnet, dass** der Verschleißfühler in seiner aktiven Stellung einen Freilauf (108) in Drehung versetzt, der mit der Stange gekoppelt ist und der deren Drehung bewirkt.

3. Scheibenbremse nach Anspruch 2, **dadurch gekennzeichnet, dass** außerhalb der aktiven Stellung des Verschleißfühlers, wenn der Freilauf (108) durch den Verschleißfühler in Drehung versetzt wird, die Drehbewegung des Freilaufs von der der Stange unabhängig ist.

4. Scheibenbremse nach Anspruch 2 oder 3, **dadurch gekennzeichnet, dass** der Verschleißfühler (100) einen mit dem Freilauf fest verbundenen Stift (106) umfasst und der Hebel (36) an seinem Ende (D'), das dem mit der Stange zusammenwirkenden Ende (D) entgegengesetzt ist, ein Teil (102) umfasst, das mit diesem entgegengesetzten Ende (D') fest verbunden ist und sich in Richtung der Stange erstreckt, wobei in diesem Teil ein Fenster (104) vorgesehen ist, um den Stift aufzunehmen und seine Bewegung im Inneren dieses Fensters von einem Rand (104a) des Fensters zum entgegengesetzten Rand (104) bei einer Drehbewegung des Hebels, die der maximalen Öffnung der Backen entspricht, zu gestatten.

5. Scheibenbremse nach Anspruch 4, **dadurch gekennzeichnet, dass** der Verschleißfühler (100) über eine Bewegung des Stifts hinaus, die dem maximalen Schließweg der Backen entspricht, und damit über die entsprechende Drehbewegung des Freilaufs (108) hinaus, sich in seiner aktiven Stellung befindet und die Bewegung des Stifts (106) in einer der entgegengesetzten Drehbewegung des Hebels entsprechenden Richtung den Freilauf in Drehung versetzt, der seinerseits die Drehung der Stange (40) bewirkt.

6. Scheibenbremse nach Anspruch 4 oder 5, **dadurch gekennzeichnet, dass** die entgegengesetzten Ränder (104a, 104b) des Fensters (104) zueinander nicht parallel sind, um unabhängig von dem Grad des Verschleißes eines Konstanz im Ausgleich des durch den Verschleiß der Kufen bewirkten Spiels zu gewährleisten.

7. Scheibenbremse nach Anspruch 1 bis 6, **dadurch gekennzeichnet, dass** der Verschleißfühler (100) mit einem Teil der Stange (40) zusammenwirkt, der in Nähe eines (40b) ihrer Enden gelegen ist, das zu dem mit dem Hebel (36) zusammenwirkenden Ende (40a) entgegengesetzt ist.

8. Scheibenbremse nach einem der Ansprüche 1 bis 7, **dadurch gekennzeichnet, dass** jede Backe (16, 18) auf einem Arm über eine sogenannte Montageachse (26, 28) montiert ist und ein Schwingarm (58, 60) über seine beiden entgegengesetzten Enden um zwei Schwenkachsen (54, 62, 56, 64) verschwenkbar montiert ist, wobei eine an einem Lappen (17, 19) der entsprechenden Backe und die andere auf einem feststehenden Sockel (34) montiert ist, wobei das Ende (O, O') dieses Arms drehbar an diesem Sockel über eine Drehachse (30, 32) montiert ist, wobei die Einheit der Montage-, Schwenk- und Drehachsen zueinander parallel angeordnet sind, so dass sie ein Steuerparallelogramm bilden.

9. Scheibenbremse nach einem der Ansprüche 1 bis 8, **dadurch gekennzeichnet, dass** einer der Arme (22), der die Backe (16) trägt, die die erste ist, die sich von der Scheibe entfernt, wenn die Betätigungsmittel (44) betätigt werden, um einen Bremslösungsvorgang zu bewirken, mit einem Anschlagsmechanismus (110) verbunden ist, der mit einem vorbestimmten Spiel montiert ist, das der Hälfte der maximalen Öffnung der beiden Backen entspricht, wobei dieser Mechanismus ausgebildet und bemessen ist, um der Backe zu gestatten, sich von der Scheibe um einen Abstand d, der gleich der Hälfte der maximalen Öffnung der beiden Backen ist, bei einem dynamischen Abgleich der Bremse zu entfernen, wodurch die Öffnung der Backen gleich verteilt wird.

10. Scheibenbremse nach Anspruch 9, **dadurch gekennzeichnet, dass** der Arm verdoppelt ist und der Anschlagsmechanismus (110) ein Verbindungsorgan (112) zwischen den beiden parallelen Armen (22, 23) umfasst, das der Drehbewegung der Arme folgt, wobei dieses Organ mit einem Element (138) gekoppelt ist, das um eine feststehende Achse (140) verschwenkbar montiert ist, die zur Drehachse der Arme parallel ist, wobei das verschwenkbare Element (138) auf der feststehenden Achse mit einem dem Abstand (d) entsprechenden Spiel befestigt ist, so dass das verschwenkbare Element bei der Drehbewegung der Arme sich um den Abstand (d) bewegt und an dieser feststehenden Achse in Anschlag kommt.

11. Scheibenbremse nach Anspruch 10, **dadurch gekennzeichnet, dass** das Verbindungsorgan (112) die beiden Arme (22, 23) durch zwei entgegengesetzte Endabschnitte (114, 116) verbindet, die längs einer sogenannten Verbindungsachse (118) angeordnet sind, die zur feststehenden Achse des verschwenkbaren Elements parallel ist, wobei dieses Verbindungsorgan einen sogenannten zentralen Abschnitt (126) umfasst, mit dem ein Ende eines mit dem verschwenkbaren Element (138) verbundenen Schwingarms (134) gekoppelt ist, und Reibungsmittel (128) zwischen diesem zentralen Abschnitt (126) und einem der Arme (22) vorgesehen sind.

12. Scheibenbremse nach Anspruch 11, **dadurch gekennzeichnet, dass** einer (114) der Endabschnitte durch den zentralen Abschnitt (126) in Richtung des anderen Endabschnitts (116) verlängert ist und die beiden Endabschnitte aneinander befestigt sind.

13. Scheibenbremse nach Anspruch 12, **dadurch gekennzeichnet, dass** zwischen dem Endabschnitt (116), der demjenigen entgegengesetzten ist, in dessen Nähe die Reibungsmittel (128) angeordnet sind, und dem zentralen Abschnitt (126) elastische Mittel (130) angeordnet sind, so dass diese Reibungsmittel zwischen diesem zentralen Abschnitt und dem entsprechenden Arm (22) eingeklemmt gehalten werden.

14. Scheibenbremse nach einem der Ansprüche 1 bis 13, **dadurch gekennzeichnet, dass** sie einen Begrenzer für die Gleitkraft mindestens eines der beiden einander gegenüberstehenden Arme (22, 24) umfasst.

15. Scheibenbremse nach einem der Ansprüche 11 und 14, **dadurch gekennzeichnet, dass** der Anschlagsmechanismus (110), der mit Reibungsmitteln versehen ist, die zwischen dem zentralen Abschnitt und dem entsprechenden Arm (22) eingeklemmt gehalten werden, ein Kraftbegrenzer ist.
